# FASCICULE DE BREVET EUROPEEN

(11) **EP 4 623 265 B1**
(45) Date de publication et mention de la délivrance du brevet: **16.09.2026**
(21) Numéro de dépôt: 23806339.0
(22) Date de dépôt: 20.11.2023
(51) Int. Cl.: F41G 7/22, G01S 13/88, H01Q 1/28, H01Q 3/06, H01Q 3/08, G01S 13/02

(54) **SYSTÈME DE POINTAGE D'UNE CIBLE**
ZIELVISIERSYSTEM
TARGET AIMING SYSTEM

(30) Priorité: 21.11.2022 FR 2212079
(43) Date de publication de la demande: 01.10.2025
(73) Titulaire: THALES, 92190 Meudon (FR)
(72) Inventeur: SLEIMAN, Hussein, 78995 ELANCOURT (FR); DALLE, Pierre-Henry, 78995 ELANCOURT (FR)
(74) Mandataire: Lavoix
(86) Numéro de dépôt international: PCT/EP2023/082376
(87) Numéro de publication internationale: WO 2024/110380

(56) Documents cités:
- EP-A1- 2 445 052
- FR-A1- 3 055 050
- US-B1- 6 853 349

## Description

La présente invention concerne un système de pointage d'une cible. La présente invention concerne aussi un procédé de pointage associé.

Le système de pointage considéré est monté sur un support mobile par rapport à la cible. Le support est, par exemple, le bâti du système de pointage ou une plateforme terrestre ou aérienne (drone par exemple). Le système de pointage comprend une surface émettrice-réceptrice d'un signal dans une direction de pointage et un dispositif de pivotement permettant de modifier l'orientation de la direction de pointage par rapport au support en fonction des mouvements relatifs de la cible par rapport au support. Le dispositif de pivotement est propre à pivoter la direction de pointage autour de deux axes, un premier axe dit « axe de roulis » coaxial à l'axe principal du support, et un deuxième axe dit « axe de site » orthogonal au premier axe et à la direction de pointage. La direction de pointage est ainsi repérée par un angle de roulis et un angle de site dans un repère propre au support.

Les consignes en vitesse *Ṙ* et *Ṡ* à appliquer respectivement à l'angle de roulis *R* et à l'angle de site *S* pour conserver une direction de pointage constante indépendamment des mouvements du support et de la cible sont les suivantes : $\left\{\begin{matrix}\dot{S} = - q . cos \left(R\right) - r . sin \left(R\right) \\ \dot{R} = - p + \frac{- q . sin \left(R\right) + r . cos \left(R\right)}{tan \left(S\right)}\end{matrix}\right.$ avec *p* la vitesse de rotation du support autour de l'axe de roulis, et *q* et *r* les vitesses de rotation du support autour respectivement de l'axe de tangage et de l'axe de lacet, les axes de tangage et de lacet sont orthogonaux à l'axe de roulis et orthogonaux entre eux.

A partir de ces équations, à cause du terme en $\frac{1}{tan \left(S\right)}$, on constate l'existence d'un point singulier à site nul, c'est-à-dire lorsque la direction de pointage est alignée avec l'axe de roulis. En effet, lorsque l'angle de site *S* tend vers 0, la vitesse de roulis théorique pour compenser les mouvements du support ou de la cible devient infinie, de sorte qu'il est impossible de suivre les mouvements d'une cible proche de l'axe du support.

Ainsi, lorsque la cible se déplace autour du point singulier, les sollicitations en roulis peuvent exciter la plateforme à cause des changements brusques. De plus, cela nécessite un besoin en énergie conséquent pour assurer ces dynamiques.

Dans EP 2 445 052 A, il a été développé il y a quelques années des antennes comprenant un positionneur tri-axe permettant le pivotement de la direction de pointage de l'antenne autour d'un axe dit « de cross-élévation » utilisé pour éliminer un point singulier existant dans le pointage de l'antenne. Une telle antenne est destinée à la communication par satellites. Dans FR 3 055 050 A, il est présenté un dispositif de pivotement tertiaire comprenant un module de balayage électronique autour de l'axe tertiaire adapté pour déphaser le point singulier.

Toutefois, ces solutions nécessitent des modifications mécaniques et ne sont pas toujours compatibles avec l'espace disponible ou bien sont difficiles à mettre en oeuvre.

Il existe donc un besoin pour un moyen permettant d'orienter plus simplement et quel que soit l'espace disponible, la direction de pointage d'une surface d'émissionréception d'un signal, montée sur un support, pour le suivi d'une cible indépendamment des mouvements relatifs de la cible par rapport au support.

A cet effet, la présente description a pour objet un système de pointage d'une cible, le système de pointage étant monté sur un support mobile par rapport à la cible, un repère, dit repère support, étant défini par rapport au support, le repère support ayant trois axes orthogonaux entre eux parmi un axe primaire, un axe secondaire et un axe tertiaire, le système de pointage comprenant :
a. une surface émettrice-réceptrice d'un signal dans une direction de pointage , la direction de pointage étant repérée par un angle de roulis et un angle de site dans le repère support,
b. un dispositif de pivotement propre à modifier l'orientation de la direction de pointage en fonction d'une consigne de pivotement, le dispositif de pivotement étant propre à faire pivoter la direction de pointage autour de l'axe primaire du repère support pour modifier l'angle de roulis et à faire pivoter la direction de pointage autour de l'axe secondaire du repère support pour modifier l'angle de site,
c. un dispositif de détermination en continu de la consigne de pivotement en fonction de la vitesse de rotation du support par rapport à la cible, dite vitesse support-cible , de sorte à orienter la direction de pointage vers la cible), la consigne de pivotement comprenant une consigne de vitesse de rotation autour de l'axe primaire, dite consigne de vitesse en roulis, et une consigne de vitesse de rotation autour de l'axe secondaire, dite consigne de vitesse en site, le dispositif de détermination étant configuré pour :
   i. recevoir au cours du temps la vitesse support-cible,
   ii. recevoir, à chaque instant, des données de pointage comprenant l'angle de roulis et l'angle de site de la direction de pointage, la direction de pointage étant considérée être la direction de la cible,
   iii. déterminer, à chaque instant, la consigne de vitesse en site selon une loi de commande en site en fonction des données de pointage reçues et de la dernière vitesse support-cible reçue, et
   iv. déterminer, à chaque instant, la consigne de vitesse en roulis en fonction des données de pointage reçues et de la dernière vitesse support-cible reçue, la consigne de vitesse en roulis étant déterminée selon des lois de commande en roulis différentes lorsque l'angle de site est supérieur à un angle de site limite, dit angle singulier, et lorsque l'angle de site est inférieur ou égal à l'angle singulier.

Suivant des modes de réalisation particuliers, le système de pointage comprend une ou plusieurs des caractéristiques suivantes, prise(s) isolément ou suivant toutes les combinaisons techniquement possibles :
- lorsque l'angle de site est inférieur ou égal à l'angle singulier, la loi de commande en roulis est dépourvue de termes en $\frac{1}{tan \left(S\right)}$ avec S l'angle de site de la direction de pointage ;
- la zone de l'espace correspondant à des angles de site inférieurs à l'angle singulier est un cône, dit cône singulier, la cible étant considérée hors du cône singulier lorsque l'angle de site est supérieur à l'angle singulier, et dans le cône singulier sinon, lorsque la cible est dans le cône singulier, la loi de commande en roulis étant fonction d'une estimation de l'angle de roulis lors de la prochaine sortie de la cible du cône singulier ;
- la loi de commande en roulis est :
   a. tant que la cible est dans le cône singulier et que la vitesse support-cible est constante, une loi de commande en roulis initiale déterminée lors de la dernière entrée de la cible dans le cône singulier, et
   b. lorsque la cible est dans le cône singulier, et à chaque fois que la vitesse support-cible reçue varie, une loi de commande en roulis mise à jour à partir du point du cône singulier correspondant à la réception de la vitesse support-cible ;

- lorsque l'angle de site est inférieur ou égal à l'angle singulier, le dispositif de détermination est configuré pour déterminer chacune de la loi de commande en roulis initiale et des éventuels lois de commandes en roulis mises à jour en fonction d'un angle de roulis initial et d'un angle de roulis final, l'angle de roulis initial étant l'angle de roulis en un point du cône singulier, dit point de départ, le point de départ étant le point d'entrée de la cible dans le cône singulier pour la loi de commande en roulis initiale et étant le point du cône singulier correspondant à la réception de la dernière vitesse support-cible pour chaque loi de commande en roulis mise à jour, l'angle de roulis final correspondant à l'angle de roulis estimé lors de la prochaine sortie de la cible du cône singulier, la prochaine sortie de la cible étant estimée en supposant que la cible suit une trajectoire prédéterminée depuis le point de départ ;
   - lorsque l'angle de site est inférieur ou égal à l'angle singulier, la loi de commande en roulis est une fonction du temps dont les coefficients sont déterminés par le dispositif de détermination en fonction de l'angle de roulis initial et de l'angle de roulis final correspondant, la fonction étant de préférence une fonction polynomiale.
   - lorsque l'angle de site est inférieur ou égal à l'angle singulier, le dispositif de détermination est configuré pour estimer l'angle de roulis final par transformation de la vitesse support-cible reçue en vitesses linéaires dans un repère géométrique, dit repère singulier, le repère singulier étant un repère en coordonnées polaires dont la coordonnée radiale est l'angle de site et la coordonnée angulaire est l'angle de roulis , la vitesse en rotation de la cible autour de l'axe secondaire étant une vitesse linéaire selon l'axe des ordonnées dans le repère singulier, la vitesse en rotation de la cible autour de l'axe tertiaire étant une vitesse linéaire selon l'axe des abscisses dans le repère singulier ;
   - l'angle de roulis final est obtenu par la formule suivante : ${R}_{F} = {R}_{0} + π - 2 α$ Où:
      - *R_{F}* est l'angle de roulis final,
      - *R*₀ est l'angle de roulis initial, $α = acos \left(\vec{U}.\vec{{V}_{c}}\right) ,$ $\vec{U} = \left(\begin{matrix}- sin \left({R}_{0}\right) \\ cos \left({R}_{0}\right)\end{matrix}\right) ,$
      - $\vec{{V}_{c}} = \left(\begin{matrix}q \\ - r\end{matrix}\right)$ avec q la vitesse de rotation du support autour de l'axe secondaire et r la vitesse de rotation du support autour de l'axe tertiaire ;
      - lorsque l'angle de site est supérieur à l'angle singulier, la loi de commande en roulis est de la forme suivante : $\dot{R} = - p + \frac{- q . sin \left(R\right) + r . cos \left(R\right)}{tan \left(S\right)}$ Où:
         - *Ṙ* est la consigne de vitesse en roulis,
         - p est la vitesse de rotation du support autour de l'axe primaire, q la vitesse de rotation du support autour de l'axe secondaire et r la vitesse de rotation du support autour de l'axe tertiaire,
         - *R* est l'angle de roulis de la direction de pointage, et
         - *S* est l'angle de site de la direction de pointage.

La présente invention a aussi pour objet un procédé de pointage d'une cible par un système de pointage tel que décrit précédemment, le procédé comprenant les étapes suivantes:
- la détermination, à chaque instant, par le dispositif de détermination, de la consigne de pivotement, comprenant :
   ∘ la réception au cours du temps de la vitesse support-cible,
   ∘ la réception, à chaque instant, des données de pointage comprenant l'angle de roulis et l'angle de site de la direction de pointage dans le repère support, la direction de pointage étant considérée être la direction de la cible ,
   ∘ la détermination, à chaque instant, de la consigne de vitesse en site selon une loi de commande en site en fonction des données de pointage reçues et de la dernière vitesse support-cible reçue, et
   ∘ la détermination, à chaque instant, de la consigne de vitesse en roulis en fonction des données de pointage reçues et de la dernière vitesse support-cible reçue, la consigne de vitesse en roulis étant déterminée selon des lois de commande en roulis différentes lorsque l'angle de site est supérieur à un angle de site limite, dit angle singulier, et lorsque l'angle de site est inférieur ou égal à l'angle singulier,
- la modification, par le dispositif de pivotement, de l'orientation de la direction de pointage en fonction de la dernière consigne de pivotement déterminée.

D'autres caractéristiques et avantages de l'invention apparaîtront à la lecture de la description qui suit de modes de réalisation de l'invention, donnés à titre d'exemple uniquement et en référence aux dessins qui sont :
[Fig 1], Figure 1, une représentation schématique d'un exemple d'un système de pointage d'une cible, le système étant monté sur un support mobile par rapport à la cible, le système étant pivotable (en roulis et en site) par rapport au support, le système comprenant une surface émettrice-réceptrice d'un signal dans une direction de pointage,
[Fig 2], Figure 2, une représentation schématique du système de pointage de la figure 1 et des angles de roulis et de site permettant de repérer l'orientation de la direction de pointage dans un repère propre au support,
[Fig 3], Figure 3, une représentation schématique d'un exemple de différentes lois de commande en roulis en fonction de la position de la cible par rapport au cône singulier,
[Fig 4], Figure 4, une représentation schématique des coordonnées radiales dans le repère singulier,
[Fig 5], Figure 5, une représentation schématique des coordonnées angulaires dans le repère singulier,
[Fig 6], Figure 6, une représentation schématique de la transformation de la vitesse de rotation en tangage du support par rapport à la cible en une vitesse linéaire dans le repère singulier,
[Fig 7], Figure 7, une représentation schématique de la transformation de la vitesse de rotation en lacet du support par rapport à la cible en une vitesse linéaire dans le repère singulier,
[Fig 8], Figure 8, une représentation schématique de la transformation de la vitesse de rotation (lacet, tangage) du support par rapport à la cible en une vitesse linéaire dans le repère singulier,
[Fig 9], Figure 9, une représentation schématique de la trajectoire estimée de la cible dans le cône singulier en cas de vitesse de rotation constante du support par rapport à la cible,
[Fig 10], Figure 10, une représentation schématique des conditions aux limites, de l'angle de roulis initial et de l'angle de roulis final estimé permettant de déterminer la loi de commande en roulis lorsque la cible est dans le cône singulier, et
[Fig 11], Figure 11, une représentation schématique de la trajectoire estimée de la cible dans le cône singulier en cas de vitesse de rotation variable du support par rapport à la cible.

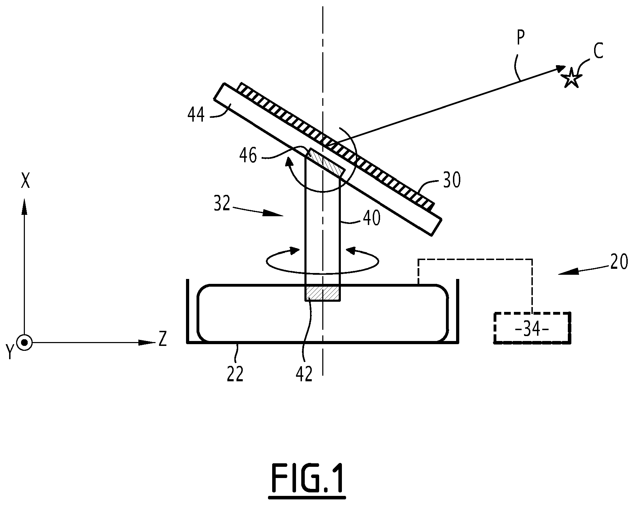

Un système 20 de pointage d'une cible C est illustré par la figure 1.

Le système de pointage 20 est monté sur un support 22 mobile par rapport à la cible C. Les mouvements relatifs du support 22 par rapport à la cible C sont au moins des mouvements de rotation (roulis, lacet, tangage), et de préférence aussi des mouvements de translation. Les mouvements relatifs du support 22 par rapport à la cible C sont dus soit au déplacement du support 22 alors que la cible C est fixe, soit au déplacement de la cible C alors que le support 22 est fixe, soit à un déplacement à la fois du support 22 et de la cible C.

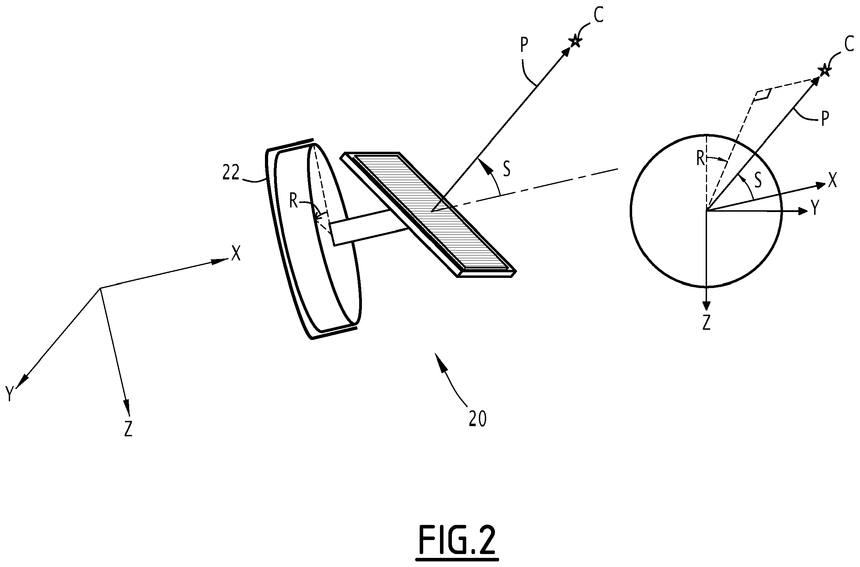

Un repère, dit repère support, est défini par rapport au support 22. Le repère support est un repère attaché au support 22 (donc fixe par rapport au support 22). Le repère support comprend trois axes orthogonaux entre eux, à savoir :
- un axe primaire X, aussi appelé axe de roulis, autour duquel est défini la rotation en roulis du support 22 par rapport à la cible C,
- un axe secondaire Y, aussi appelé axe de tangage, autour duquel est défini la rotation en tangage du support 22 par rapport à la cible C, et
- un axe tertiaire Z, aussi appelé axe de lacet, autour duquel est défini la rotation en lacet du support 22 par rapport à la cible C. Ces axes sont illustrés sur les figures 1 et 2.

La vitesse de rotation du support 22 par rapport à la cible C est dite vitesse support-cible V_{S}. La vitesse support-cible V_{S} est, ainsi, une vitesse relative qui varie : lorsque la vitesse de la cible C varie alors que le support 22 est fixe ou lorsque la vitesse du support 22 varie alors que la cible C est fixe ou encore lorsqu'à la fois le support 22 et la cible C sont mobiles et que la vitesse de la cible C varie par rapport à la vitesse du support 22.

La vitesse support-cible V_{S} comprend une composante de vitesse de rotation autour de l'axe primaire X, dite vitesse de roulis p, une composante de vitesse de rotation autour de l'axe secondaire Y, dite vitesse de tangage q, et une composante de vitesse de rotation autour l'axe tertiaire Z, dite vitesse de lacet r.

Le support 22 est par exemple un élément du système de pointage 20, tel qu'un élément de bâti. En variante, le système de pointage 20 est un porteur, tel qu'un drone ou une nacelle de désignation.

Le système de pointage 20 comprend une surface émettrice-réceptrice 30, un dispositif de pivotement 32 et un dispositif de détermination 34.

La surface émettrice-réceptrice 30 est propre à émettre un signal dans une direction de pointage P. Le signal est, par exemple, une onde électromagnétique. La surface émettrice-réceptrice 30 est, par exemple, une antenne.

La direction de pointage P est repérée par un angle de roulis R et un angle de site S dans le repère support. Comme illustré par la figure 2, l'angle de roulis R est l'angle entre l'axe tertiaire Z et la projection de la direction de pointage P dans un plan orthogonal à l'axe primaire X (plan YZ). L'angle de site S est l'angle entre l'axe primaire X et la direction de pointage P. Dans ce qui suit, la direction de pointage P est considérée être la direction de la cible C. Ainsi, la cible C est initialement pointée par la direction de pointage P et les commandes de pivotement calculées dans ce qui suit visent à maintenir cet alignement.

Typiquement, l'angle de roulis R varie entre 0 et 360°. Par contre, l'angle de site S varie entre 0 et 60° (pas de site en négatif du fait d'une limitation technologique de la surface émettrice-réceptrice 30).

La zone de l'espace correspondant à des angles de site inférieurs à l'angle singulier S_{L} est un cône, dit cône singulier C_{sing}. La cible C est considérée hors du cône singulier C_{sing} lorsque l'angle de site S de la cible C est supérieur à l'angle singulier S_{L}, et dans le cône singulier C_{sing} sinon.

La surface émettrice-réceptrice 30 est propre à être pivotée par rapport au support 22 de sorte à modifier l'orientation de la direction de pointage P. De préférence, le pivotement s'effectue seulement autour de l'axe primaire X (pour modifier l'angle de roulis R) et de l'axe secondaire Y (pour modifier l'angle de site S). La surface émettrice-réceptrice 30 n'est ainsi pas propre à pivoter en gisement.

Le dispositif de pivotement 32 est propre à modifier l'orientation de la direction de pointage P en fonction d'une consigne de pivotement.

En particulier, le dispositif de pivotement 32 est propre à faire pivoter la direction de pointage P autour de l'axe primaire X du repère support pour modifier l'angle de roulis R et à faire pivoter la direction de pointage P autour de l'axe secondaire Y du repère support pour modifier l'angle de site S.

Dans un exemple de réalisation, le dispositif de pivotement 32 comprend un premier support intermédiaire 40, un premier actionneur 42, un second support intermédiaire 44, et un second actionneur 46.

Le premier support intermédiaire 40 est monté mobile en rotation par rapport au support 22 autour de l'axe primaire X. La surface émettrice-réceptrice 30 est montée sur le premier support intermédiaire 40.

Le premier actionneur 42 est propre à entraîner le premier support intermédiaire 40 en rotation autour de l'axe de roulis X du repère support. Le premier actionneur 42 est, par exemple, un moteur.

Le second support intermédiaire 44 est monté mobile en rotation par rapport au support 22 autour de l'axe secondaire Y. La surface émettrice-réceptrice 30 est montée sur le second support intermédiaire 44.

Le second actionneur 46 est propre à entraîner le second support intermédiaire 44 en rotation autour de l'axe secondaire Y du repère support. Le second actionneur 46 est, par exemple, un moteur.

En variante, la surface émettrice-réceptrice 30 est une antenne à balayage électronique, et le pivotement de la direction de pointage P autour de l'axe secondaire Y est réalisée par balayage électronique venant remplacer le second support intermédiaire 44 et le second actionneur 46.

Le dispositif de détermination 34 est, par exemple, un calculateur en interaction avec un produit programme d'ordinateur. Dans ce cas, le calculateur comprend un processeur comprenant une unité de traitement de données, des mémoires et un lecteur de support d'informations. En variante, le dispositif de détermination 34 est réalisé au moins partiellement sous la forme d'un composant logique programmable, ou encore sous la forme d'un circuit intégré dédié.

Le dispositif de détermination 34 est configuré pour déterminer en continu la consigne de pivotement en fonction de la vitesse de rotation du support 22 par rapport à la cible C, dite vitesse support-cible V_{S}, de sorte à orienter la direction de pointage P sur la cible C. Plus précisément, la consigne de pivotement vise à conserver la direction de pointage P sensiblement alignée sur la cible C. Par sensiblement, il est entendu qu'une tolérance de quelques degrés est tolérée. En outre, comme cela sera explicité dans la suite de la description, la direction de pointage P est potentiellement non alignée avec la cible dans le cône singulier, mais redevient sensiblement alignée sur la cible en sortie du cône singulier.

La consigne de pivotement comprend une consigne de vitesse de rotation autour de l'axe primaire X, dite consigne de vitesse en roulis *Ṙ*, et une consigne de vitesse de rotation autour de l'axe secondaire Y, dite consigne de vitesse en site *Ṡ*.

Le dispositif de détermination 34 est configuré pour déterminer la consigne de vitesse en mettant en œuvre des étapes d'un procédé de pointage d'une cible C. Un tel procédé est décrit dans ce qui suit.

Le procédé de pointage est mis en œuvre par le système de pointage 20 décrit précédemment.

En particulier, le procédé de pointage comprend une étape 100 de détermination, à chaque instant, de la consigne de pivotement et une étape 200 de modification de l'orientation de la direction de pointage P en fonction de la dernière consigne de pivotement déterminée. L'étape 100 est mise en œuvre par le dispositif de détermination 34. L'étape 200 est mise en œuvre par le dispositif de pivotement 32.

L'étape de détermination 100 comprend la réception au cours du temps de la vitesse support-cible V_{S}. La vitesse support-cible V_{S} est, par exemple, acquise à intervalles de temps régulier, par exemple toutes les 5 millisecondes. La vitesse support-cible V_{S} est, par exemple, obtenue via des mesures réalisées par un capteur ou par une centrale inertielle propre au support 22.

L'étape de détermination 100 comprend la réception, à chaque instant, de données de pointage DP comprenant l'angle de roulis R et l'angle de site S de la direction de pointage P. Les données de pointage DP sont, par exemple, issues d'un capteur. L'angle de roulis R est, par exemple, obtenu par un codeur de recopie de position du premier support intermédiaire 40. L'angle de site S est par exemple obtenu par l'antenne (écartomètrie).

L'étape de détermination 100 comprend la détermination, à chaque instant, de la consigne de vitesse en site *Ṡ* selon une loi de commande en site en fonction des données de pointage DP reçues et de la dernière vitesse support-cible V_{S} reçue.

De préférence, la loi de commande en site est de la forme suivante : $\dot{S} = - q . cos \left(R\right) - r . sin \left(R\right)$ Où :
- *Ṡ* est la consigne de vitesse en site,
- q est la vitesse de rotation du support 22 autour de l'axe secondaire Y,
- r est la vitesse de rotation du support 22 autour de l'axe tertiaire Z, et
- *R* est l'angle de roulis.

L'étape de détermination 100 comprend la détermination, à chaque instant, de la consigne de vitesse en roulis *Ṙ* en fonction des données de pointage DP reçues et de la dernière vitesse support-cible V_{S} reçue.

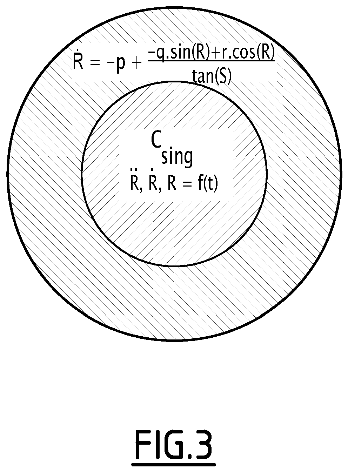

La consigne de vitesse en roulis *Ṙ* est déterminée selon des lois de commande en roulis différentes lorsque l'angle de site S est strictement supérieur à un angle de site limite, dit angle singulier S_{L}, et lorsque l'angle de site S est inférieur ou égal à l'angle singulier S_{L}. L'angle singulier est typiquement de quelques degrés, par exemple est inférieur ou égal à 5 degrés. La figure 3 illustre un exemple des différentes lois de commandes en roulis appliquées dans et hors du cône singulier C_{sing}.

De préférence, lorsque l'angle de site S est strictement supérieur à l'angle singulier S_{L}, la loi de commande en roulis est de la forme suivante : $\dot{R} = - p + \frac{- q . sin \left(R\right) + r . cos \left(R\right)}{tan \left(S\right)}$ Où:
- *Ṙ* est la consigne de vitesse en roulis,
- p est la vitesse de rotation du support 22 autour de l'axe primaire X,
- q est la vitesse de rotation du support 22 autour de l'axe secondaire Y,
- r la vitesse de rotation du support 22 autour de l'axe tertiaire Z,
- *R* est l'angle de roulis de la direction de pointage P, et
- *S* est l'angle de site de la direction de pointage P.

De préférence, lorsque l'angle de site S est inférieur ou égal à l'angle singulier S_{L}, la loi de commande en roulis est dépourvue de termes en $\frac{1}{tan \left(S\right)}$ avec S l'angle de site de la direction de pointage P.

Dans un exemple de mise en oeuvre, lorsque la cible C est dans le cône singulier C_{sing}, la loi de commande en roulis est fonction d'une estimation de l'angle de roulis R de la cible C lors de la prochaine sortie de la cible C du cône singulier C_{sing}.

Selon cet exemple de mise en oeuvre, de préférence, la loi de commande en roulis est :
- tant que la cible C est dans le cône singulier C_{sing} et que la vitesse support-cible V_{S} est constante, une loi de commande en roulis initiale déterminée lors de la dernière entrée de la cible C dans le cône singulier C_{sing}, et
- lorsque la cible C est dans le cône singulier C_{sing}, et à chaque fois que la vitesse support-cible V_{S} reçue varie, une loi de commande en roulis mise à jour à partir du point du cône singulier C_{sing} correspondant à la réception de la vitesse support-cible V_{S}.

Selon cet exemple de mise en oeuvre, de préférence, lorsque l'angle de site S est inférieur ou égal à l'angle singulier S_{L}, chacune de la loi de commande en roulis initiale et des éventuels lois de commandes en roulis mises à jour sont déterminées en fonction d'un angle de roulis initial R₀ et d'un angle de roulis final R_{F}.

L'angle de roulis initial R₀ est l'angle de roulis en un point du cône singulier C_{sing}, dit point de départ P_{D}. Le point de départ P_{D} est le point d'entrée de la cible C dans le cône singulier C_{sing} pour la loi de commande en roulis initiale et est le point du cône singulier C_{sing} correspondant à la réception de la dernière vitesse support-cible V_{S} pour chaque loi de commande en roulis mise à jour.

L'angle de roulis final R_{F} correspond à l'angle de roulis estimé lors de la prochaine sortie de la cible C du cône singulier C_{sing}. La prochaine sortie de la cible C est estimée en supposant que la cible C suit une trajectoire prédéterminée depuis le point de départ P_{D}. La trajectoire prédéterminée est, par exemple, une trajectoire rectiligne.

De préférence, lorsque l'angle de site S est inférieur ou égal à l'angle singulier S_{L}, la loi de commande en roulis est une fonction du temps dont les coefficients sont déterminés par le dispositif de détermination 34 en fonction de l'angle de roulis initial R₀ et de l'angle de roulis final R_{F} correspondant. La fonction est de préférence une fonction polynomiale.

De préférence, lorsque l'angle de site S est inférieur ou égal à l'angle singulier S_{L}, le dispositif de détermination 34 est configuré pour estimer l'angle de roulis final R_{F} par transformation de la vitesse support-cible V_{S} reçue en vitesses linéaires dans un repère géométrique, dit repère singulier.

Le repère singulier est un repère en coordonnées polaires dont la coordonnée radiale (exprimée en radians) est l'angle de site S et la coordonnée angulaire est l'angle de roulis R. La vitesse en rotation de la cible C autour de l'axe secondaire Y (tangage) est une vitesse linéaire selon l'axe des ordonnées Zsing dans le repère singulier. La vitesse en rotation de la cible C autour de l'axe tertiaire Z (lacet) est une vitesse linéaire selon l'axe des abscisses Ysing dans le repère singulier.

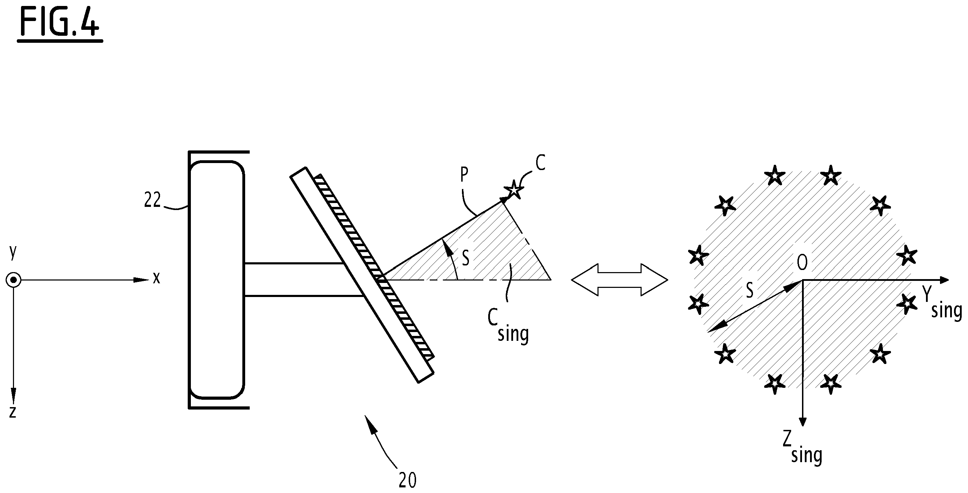

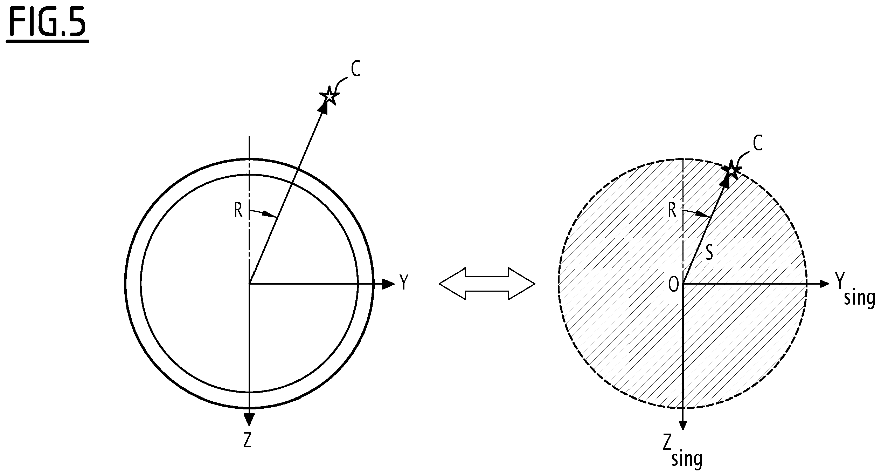

Les figures 4 et 5 illustrent respectivement les coordonnées radiales et angulaires dans le repère singulier. Ainsi, chaque position de la cible C dans l'espace est définie par une position dans le repère singulier (O, Ysing, Zsing) et vice-versa. Cette position est unique. En effet, la transformation changement de repère de l'espace en 3 dimensions vers le repère singulier (O, Ysing, Zsing) en 2 dimensions est bijective.

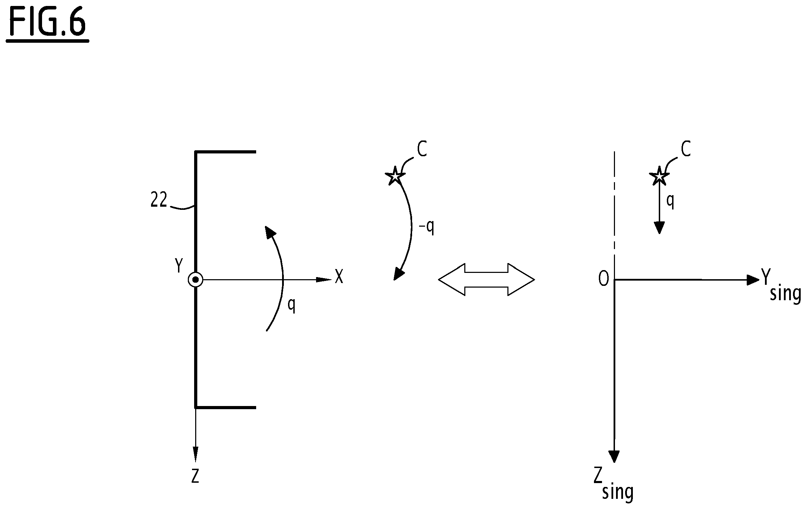

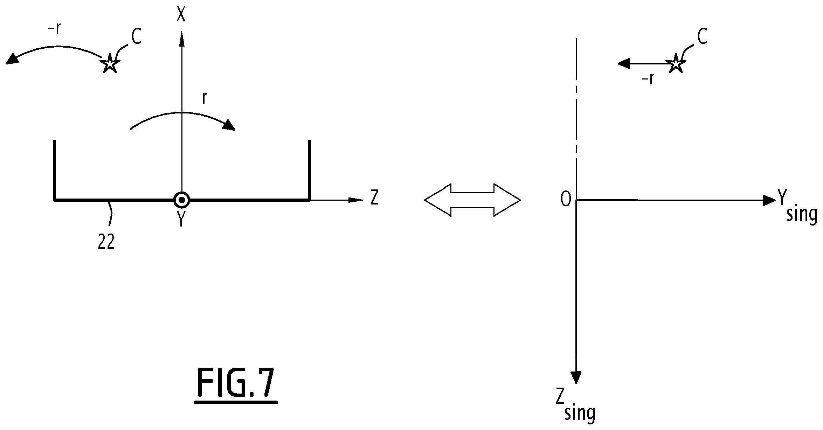

Les figures 6 et 7 illustrent respectivement les transformations de vitesse de rotation du support 22 dans le repère singulier. En effet, considérons une vitesse de rotation *q* du support 22 autour de son axe secondaire Y, en relatif cela revient à une vitesse de la cible C en -q par rapport au support 22. Dans le repère singulier, cette vitesse devient une vitesse linéaire suivant Zsing (voir figure 6). Considérons une vitesse de rotation *r* du support 22 autour de son axe tertiaire Z, en relatif cela revient à une vitesse de la cible C en *-r* par rapport au support 22. Dans le repère singulier, cette vitesse devient une vitesse linéaire suivant l'axe -Ysing (voir figure 7).

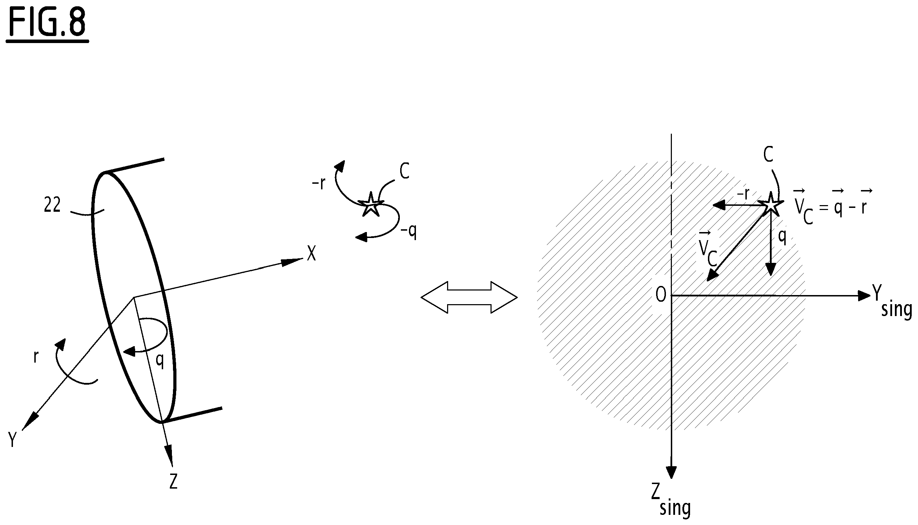

La figure 8 illustre la transformation du mouvement de rotation du support 22 en tangage et en lacet dans le repère singulier. Le mouvement de rotation du support 22 en q et rest, ainsi, transformé en une vitesse linéaire de la cible C dans le repère singulier. Cette vitesse linéaire vaut dans le nouveau repère *̅V̅_̅{̅c̅}̅*̅ = *̅q̅*̅ - *̅r̅*̅.

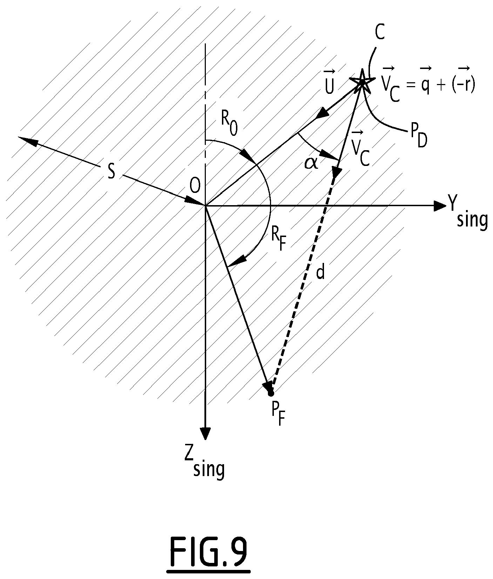

Rappelons que l'on cherche à calculer la vitesse en roulis pour garder la direction de pointage P constante sur la cible C. Lorsque la cible C se trouve dans le cône singulier C_{sing} (proche du site nul), on estime la trajectoire de la cible C pour trouver son point de sortie P_{F} du cône grâce au nouveau repère dans lequel les vitesses de rotation sont transformées en vitesses linéaires. Plus précisément, les différents paramètres de la trajectoire sont exprimés de la manière suivante en référence à la figure 9 :
Soit *R*₀ l'angle roulis lorsque la cible C entre dans le cône singulier C_{sing}.

Soit *V̅_{c} = q̅ - r̅* la vitesse de la cible C à l'entrée du cône singulier C_{sing}.

Dans un premier temps on prend l'hypothèse que la vitesse reste constante dans le cône singulier C_{sing} :
Par construction géométrique le point de sortie P_{F} se calcule comme suit :
$U = \left(\begin{matrix}- sin \left({R}_{0}\right) \\ cos \left({R}_{0}\right)\end{matrix}\right)$ est un vecteur unitaire orienté vers le centre du repère singulier.
*α* = *atan2*(*U*) - *atan2*(*Vc*) est l'angle entre le vecteur vitesse *V̅_{c}* et le vecteur unitaire *̅U̅*̅. La fonction atan2(y,x) est une variante de la fonction arc tangente. Pour tous arguments réels x et y non nuls, atan2(y,x) est l'angle en radians entre la partie positive de l'axe des abscisses d'un plan, et le point de ce plan de coordonnées (x,y).
L'angle de roulis correspondant au point de sortie P_{F} du cône singulier C_{sing} est : *R_{F} = R*₀ *+ π -* 2*α.*

Le module du segment de la trajectoire dans le cône est : *d* = |2 cos(*α*). *S*|

La durée nécessaire pour traverser le cône singulier C_{sing} est : $T = \frac{d}{\sqrt{{r}^{2} + {q}^{2}}}$

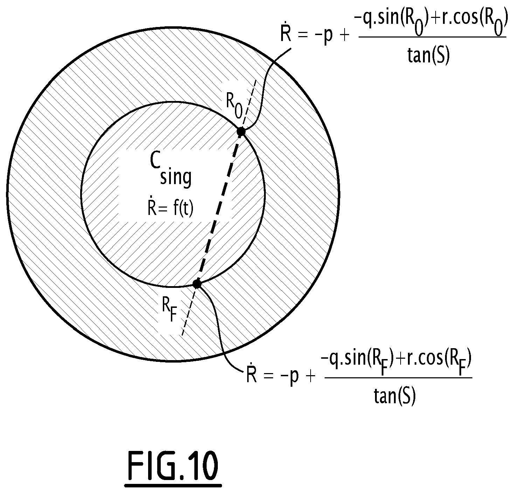

Dans cet exemple de mise en oeuvre, la loi de commande en roulis est générée de la manière suivante en référence à la figure 10. Grâce à la bijectivité da la transformation changement de repère support-repère singulier, le fait de suivre la cible C dans le nouveau repère en deux dimensions revient aussi à suivre l'orientation de la cible C dans l'espace réel. Ainsi, connaissant les informations d'entrée et de sortie du cône singulier C_{sing}, les conditions aux limites, et les conditions initiale et finale, on génère une consigne de vitesse en roulis *Ṙ* sous une forme prédéterminée. Cela peut être une fonction polynomiale, trigonométrique, etc.

Par exemple, dans le cas d'une commande polynomiale d'ordre 3 :
La consigne de vitesse dans le cône est *Ṙ*(*t*) *= poly*(*t*) *= at*³ *+ bt*² + *ct* + *d*
Condition initiale : *R(0)* = *R*₀
Condition finale : *R(T)* = *R_{F}*
Continuité de la vitesse aux frontières du cône singulier C_{sing} : $Poly \left(0\right) = - p \left(0\right) + \frac{- q . sin \left({R}_{0}\right) + r . cos \left({R}_{0}\right)}{tan \left(S\left(0\right)\right)}$ $Poly \left(T\right) = - p \left(T\right) + \frac{- q . sin \left({R}_{F}\right) + r . cos \left({R}_{F}\right)}{tan \left(S\left(T\right)\right)}$
Avec *S(T) = S(0) = S_{L}* angle de site limite du cône singulier C_{sing}.

Ainsi, à partir des 4 équations ci-dessus on en déduit les 4 inconnus *a, b, c* et *d,* et donc la consigne de vitesse pour commander le roulis et la direction de pointage P.

Ainsi, dans cet exemple de mise en œuvre, la consigne de vitesse générée est issue d'une prédiction qui anticipe le mouvement de la cible C dans le cône singulier C_{sing}.

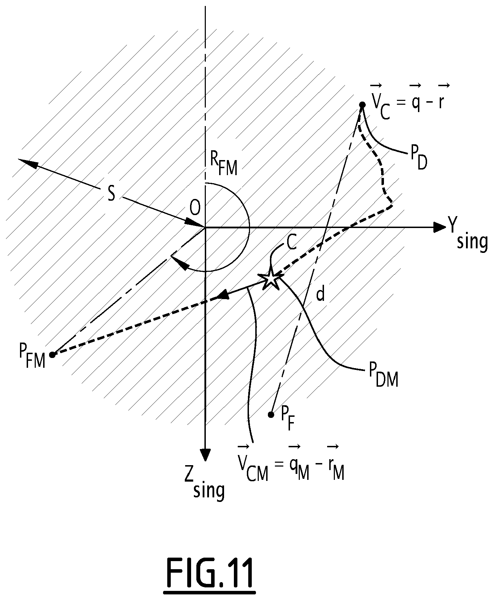

La figure 11 illustre le cas d'une variation de la vitesse de la cible C ou du support 22 dans le cône singulier C_{sing}. Par exemple, les informations de vitesses ou de position du support 22 et de la cible C sont obtenues via des capteurs portés par le support 22. Ces informations sont mises à jours à une cadence donnée.

Pour prendre en compte le changement de la dynamique dans le cône singulier C_{sing}, on met à jour régulièrement la position de la cible C dans le cône (P_{DM}) et on prédit à nouveau le point de sortie (P_{FM}) de la cible C dans le cône singulier C_{sing}.

Pour la prédiction, la trajectoire considérée est une trajectoire linéaire ou toute autre extrapolation. Ensuite, on calcule l'intersection de cette trajectoire avec le cercle du cône singulier C_{sing} pour déduire l'angle de roulis final au point de sortie. Cette mise à jour est réalisée à la période de rafraichissement des informations dynamiques de vitesses et de positions du support 22 et de la cible C ou pendant des laps de temps plus grands. A chaque mise à jour, on ajuste le point de sortie, donc l'angle de roulis final. Par conséquent, la loi de commande en roulis est aussi mise à jour de sorte que le pointage soit le plus proche de la direction de la cible C.

L'étape 200 de modification comprend la modification de l'orientation de la direction de pointage P en fonction de la dernière consigne de pivotement déterminée. En particulier, la direction de pointage P est pivotée autour de l'axe primaire selon la consigne de vitesse en roulis *Ṙ* et est pivotée autour de l'axe secondaire selon la consigne de vitesse en site *Ṡ*.

Ainsi, le présent système de pilotage permet un pilotage maitrisé, limité et optimal en roulis pour conserver une direction de pointage P constante ou légèrement modifiée et ceci indépendamment des mouvements du support 22 lorsque la cible C se trouve dans le cône singulier C_{sing}.

La solution proposée permet de s'affranchir du problème du point singulier sans faire une modification mécanique sur le système de pilotage, notamment l'ajout d'un troisième axe de pivotement. En effet, l'invention implique seulement une évolution des lois de pilotage (intervention sur le logiciel). Elle permet un pilotage maitrisé et intelligent (anticipé de la cible C). Le besoin en énergie et en vitesse pour piloter l'orientation de la direction de pointage P en roulis est en outre optimisé.

Le système de pointage décrit a été testé pour différentes valeurs de tangage et de roulis. Les valeurs suivantes concernent l'un des exemples testés, à savoir : q=35°/s (tangage), r=0°/s (lacet) et S_{L}= 3° (angle singulier) et en utilisant une loi de commande polynomiale en t³ dans le cône singulier. La vitesse de roulis obtenue est de 15,4 rad/s, l'accélération en roulis de 866 rad/s² et le couple moteur de 12 N.m. Ces valeurs sont à comparer avec celles obtenues pour une commande en roulis de l'état de la technique (en $\frac{1}{tan \left(S\right)}$) dans le cône singulier, à savoir 27,2 rad/s pour la vitesse de roulis, 2632 rad/s² pour l'accélération en roulis et 34 N.m pour le couple moteur. La précision du pointage est sensiblement la même pour les deux solutions, à savoir un écartement circulaire inférieur à 1° et un écartement en élévation inférieur à 0,05°. Ainsi, ces résultats montrent bien le gain important en vitesse et en énergie du système de pointage de l'invention.

## Revendications

1. Système de pointage (20) d'une cible (C), le système de pointage (20) étant monté sur un support (22) mobile par rapport à la cible (C), un repère, dit repère support, étant défini par rapport au support (22), le repère support ayant trois axes orthogonaux entre eux parmi un axe primaire (X), un axe secondaire (Y) et un axe tertiaire (Z), le système de pointage (20) comprenant :
a. une surface émettrice-réceptrice (30) d'un signal dans une direction de pointage (P), la direction de pointage (P) étant repérée par un angle de roulis (R) et un angle de site (S) dans le repère support,
b. un dispositif de pivotement (32) propre à modifier l'orientation de la direction de pointage (P) en fonction d'une consigne de pivotement, le dispositif de pivotement (32) étant propre à faire pivoter la direction de pointage (P) autour de l'axe primaire (X) du repère support pour modifier l'angle de roulis (R) et à faire pivoter la direction de pointage (P) autour de l'axe secondaire (Y) du repère support pour modifier l'angle de site (S),
c. un dispositif de détermination (34) en continu de la consigne de pivotement en fonction de la vitesse de rotation du support (22) par rapport à la cible (C), dite vitesse support-cible (V_{S}), de sorte à orienter la direction de pointage (P) vers la cible (C), la consigne de pivotement comprenant une consigne de vitesse de rotation autour de l'axe primaire (X), dite consigne de vitesse en roulis (*Ṙ*), et une consigne de vitesse de rotation autour de l'axe secondaire (Y), dite consigne de vitesse en site (*Ṡ*), **caractérisé en ce que** le dispositif
de détermination (34) est configuré pour :
i. recevoir au cours du temps la vitesse support-cible (V_{S}),
ii. recevoir, à chaque instant, des données de pointage (DP) comprenant l'angle de roulis (R) et l'angle de site (S) de la direction de pointage (P), la direction de pointage (P) étant considérée être la direction de la cible (C),
iii. déterminer, à chaque instant, la consigne de vitesse en site (S) selon une loi de commande en site en fonction des données de pointage (DP) reçues et de la dernière vitesse support-cible (V_{S}) reçue, et
iv. déterminer, à chaque instant, la consigne de vitesse en roulis (R) en fonction des données de pointage (DP) reçues et de la dernière vitesse support-cible (V_{S}) reçue, la consigne de vitesse en roulis (*Ṙ*) étant déterminée selon des lois de commande en roulis différentes lorsque l'angle de site (S) est supérieur à un angle de site limite, dit angle singulier (S_{L}), et lorsque l'angle de site (S) est inférieur ou égal à l'angle singulier (S_{L}).

2. Système de pointage (20) selon la revendication 1, dans lequel lorsque l'angle de site (S) est inférieur ou égal à l'angle singulier (S_{L}), la loi de commande en roulis est dépourvue de termes en $\frac{1}{tan \left(S\right)}$ avec S l'angle de site de la direction de pointage (P).

3. Système de pointage (20) selon la revendication 1 ou 2, dans lequel la zone de l'espace correspondant à des angles de site inférieurs à l'angle singulier (S_{L}) est un cône, dit cône singulier (C_{sing}), la cible (C) étant considérée hors du cône singulier (C_{sing}) lorsque l'angle de site (S) est supérieur à l'angle singulier (S_{L}), et dans le cône singulier (C_{sing}) sinon, lorsque la cible (C) est dans le cône singulier (C_{sing}), la loi de commande en roulis étant fonction d'une estimation de l'angle de roulis (R) lors de la prochaine sortie de la cible (C) du cône singulier (C_{sing}).

4. Système de pointage (20) selon la revendication 3, dans lequel la loi de commande en roulis est :
a. tant que la cible (C) est dans le cône singulier (C_{sing}) et que la vitesse support-cible (V_{S}) est constante, une loi de commande en roulis initiale déterminée lors de la dernière entrée de la cible (C) dans le cône singulier (C_{sing}), et
b. lorsque la cible (C) est dans le cône singulier (C_{sing}), et à chaque fois que la vitesse support-cible (V_{S}) reçue varie, une loi de commande en roulis mise à jour à partir du point du cône singulier (C_{sing}) correspondant à la réception de la vitesse support-cible (V_{S}).

5. Système de pointage (20) selon la revendication 4, dans lequel lorsque l'angle de site (S) est inférieur ou égal à l'angle singulier (S_{L}), le dispositif de détermination (34) est configuré pour déterminer chacune de la loi de commande en roulis initiale et des éventuels lois de commandes en roulis mises à jour en fonction d'un angle de roulis initial (R₀) et d'un angle de roulis final (R_{F}), l'angle de roulis initial (R₀) étant l'angle de roulis en un point du cône singulier (C_{sing}), dit point de départ (P_{D}), le point de départ (P_{D}) étant le point d'entrée de la cible (C) dans le cône singulier (C_{sing}) pour la loi de commande en roulis initiale et étant le point du cône singulier (C_{sing}) correspondant à la réception de la dernière vitesse support-cible (V_{S}) pour chaque loi de commande en roulis mise à jour, l'angle de roulis final (R_{F}) correspondant à l'angle de roulis estimé lors de la prochaine sortie (P_{F}) de la cible (C) du cône singulier (C_{sing}), la prochaine sortie de la cible (C) étant estimée en supposant que la cible (C) suit une trajectoire prédéterminée depuis le point de départ (P_{D}).

6. Système de pointage (20) selon la revendication 5, dans lequel lorsque l'angle de site (S) est inférieur ou égal à l'angle singulier (S_{L}), la loi de commande en roulis est une fonction du temps dont les coefficients sont déterminés par le dispositif de détermination (34) en fonction de l'angle de roulis initial (R₀) et de l'angle de roulis final (R_{F}) correspondant, la fonction étant de préférence une fonction polynomiale.

7. Système de pointage (20) selon la revendication 5 ou 6, dans lequel lorsque l'angle de site (S) est inférieur ou égal à l'angle singulier (S_{L}), le dispositif de détermination (34) est configuré pour estimer l'angle de roulis final (R_{F}) par transformation de la vitesse support-cible (V_{S}) reçue en vitesses linéaires dans un repère géométrique, dit repère singulier, le repère singulier étant un repère en coordonnées polaires dont la coordonnée radiale est l'angle de site (S) et la coordonnée angulaire est l'angle de roulis (R) , la vitesse en rotation de la cible (C) autour de l'axe secondaire (Y) étant une vitesse linéaire selon l'axe des ordonnées (Zsing) dans le repère singulier, la vitesse en rotation de la cible (C) autour de l'axe tertiaire (Z) étant une vitesse linéaire selon l'axe des abscisses (Ysing) dans le repère singulier.

8. Système de pointage (20) selon l'une quelconque des revendications 5 à 7, dans lequel l'angle de roulis final (R_{F}) est obtenu par la formule suivante : ${R}_{F} = {R}_{0} + π - 2 α$ Où :
- *R_{F}* est l'angle de roulis final,
- *R*₀ est l'angle de roulis initial, $α = acos \left(\vec{U}.\vec{{V}_{c}}\right) ,$ $\vec{U} = \left(\begin{matrix}- sin \left({R}_{0}\right) \\ cos \left({R}_{0}\right)\end{matrix}\right) ,$
- $\vec{{V}_{c}} = \left(\begin{matrix}q \\ - r\end{matrix}\right)$ avec q la vitesse de rotation du support (22) autour de l'axe secondaire (Y) et r la vitesse de rotation du support (22) autour de l'axe tertiaire (Z).

9. Système de pointage (20) selon l'une quelconque des revendications 1 à 8, dans lequel lorsque l'angle de site (S) est supérieur à l'angle singulier (S_{L}), la loi de commande en roulis est de la forme suivante : $\dot{R} = - p + \frac{- q . sin \left(R\right) + r . cos \left(R\right)}{tan \left(S\right)}$ Où :
- *Ṙ* est la consigne de vitesse en roulis,
- p est la vitesse de rotation du support (22) autour de l'axe primaire (X), q la vitesse de rotation du support (22) autour de l'axe secondaire (Y) et r la vitesse de rotation du support (22) autour de l'axe tertiaire (Z),
- *R* est l'angle de roulis de la direction de pointage (P), et
- *S* est l'angle de site de la direction de pointage (P).

10. Procédé de pointage d'une cible (C) par un système de pointage (20) selon l'une quelconque des revendications 1 à 9, le procédé comprenant les étapes suivantes:
a. la détermination, à chaque instant, par le dispositif de détermination (34), de la consigne de pivotement, comprenant :
i. la réception au cours du temps de la vitesse support-cible (V_{S}),
ii. la réception, à chaque instant, des données de pointage (DP) comprenant l'angle de roulis (R) et l'angle de site (S) de la direction de pointage (P) dans le repère support, la direction de pointage (P) étant considérée être la direction de la cible (C),
iii. la détermination, à chaque instant, de la consigne de vitesse en site (*Ṡ*) selon une loi de commande en site en fonction des données de pointage (DP) reçues et de la dernière vitesse support-cible (V_{S}) reçue, et
iv. la détermination, à chaque instant, de la consigne de vitesse en roulis (*Ṙ*) en fonction des données de pointage (DP) reçues et de la dernière vitesse support-cible (V_{S}) reçue, la consigne de vitesse en roulis (*Ṙ*) étant déterminée selon des lois de commande en roulis différentes lorsque l'angle de site (S) est supérieur à un angle de site limite, dit angle singulier (S_{L}), et lorsque l'angle de site (S) est inférieur ou égal à l'angle singulier (S_{L}),
b. la modification, par le dispositif de pivotement (32), de l'orientation de la direction de pointage (P) en fonction de la dernière consigne de pivotement déterminée.

## Patentansprüche

1. Ausrichtungssystem (20) eines Ziels (C), wobei das Ausrichtungssystem (20) auf einem Träger (22) montiert ist, der in Bezug auf das Ziel (C) beweglich ist, wobei ein Bezugssystem, Trägerbezugssystem genannt, in Bezug auf den Träger (22) definiert ist, wobei das Trägerbezugssystem drei zueinander orthogonale Achsen unter einer Primärachse (X), einer Sekundärachse (Y) und einer Tertiärachse (Z) aufweist, wobei das Ausrichtungssystem (20) umfasst:
a. eine Sende-Empfangsfläche (30) eines Signals in einer Ausrichtungsrichtung (P), wobei die Ausrichtungsrichtung (P) durch einen Rollwinkel (R) und einen Elevationswinkel (S) in dem Trägerbezugssystem erfasst wird,
b. eine Schwenkvorrichtung (32), die dazu geeignet ist, die Orientierung der Ausrichtungsrichtung (P) in Abhängigkeit von einem Schwenksollwert zu verändern, wobei die Schwenkvorrichtung (32) dazu geeignet ist, die Ausrichtungsrichtung (P) um die Primärachse (X) des Trägerbezugssystems zu schwenken, um den Rollwinkel (R) zu verändern, und die Ausrichtungsrichtung (P) um die Sekundärachse (Y) des Trägerbezugssystems zu schwenken, um den Elevationswinkel (S) zu verändern,
c. eine Vorrichtung (34) zur kontinuierlichen Bestimmung des Schwenksollwerts in Abhängigkeit von der Drehgeschwindigkeit des Trägers (22) in Bezug auf das Ziel (C), Träger-Ziel-Geschwindigkeit (V_{S}) genannt, derart, dass die Ausrichtungsrichtung (P) zu dem Ziel (C) orientiert wird, wobei der Schwenksollwert einen Sollwert der Drehgeschwindigkeit um die Primärachse (X), Rollgeschwindigkeitssollwert (R) genannt, und einen Sollwert der Drehgeschwindigkeit um die Sekundärachse (Y), Elevationsgeschwindigkeitssollwert (*Ṡ*) genannt, umfasst, **dadurch gekennzeichnet, dass** die Bestimmungsvorrichtung (34) konfiguriert ist zum:
i. Empfangen der Träger-Ziel-Geschwindigkeit (V_{S}) im Laufe der Zeit,
ii. Empfangen, zu jedem Zeitpunkt, von Ausrichtungsdaten (DP), umfassend den Rollwinkel (R) und den Elevationswinkel (S) der Ausrichtungsrichtung (P), wobei die Ausrichtungsrichtung (P) als die Richtung des Ziels (C) betrachtet wird,
iii. Bestimmen, zu jedem Zeitpunkt, des Elevationsgeschwindigkeitssollwerts (*Ṡ*) gemäß einem Elevationssteuerungsgesetz in Abhängigkeit von den empfangenen Ausrichtungsdaten (DP) und der letzten empfangenen Träger-Ziel-Geschwindigkeit (V_{S}), und
iv. Bestimmen, zu jedem Zeitpunkt, des Rollgeschwindigkeitssollwerts (R), der gemäß unterschiedlichen Rollsteuerungsgesetzen bestimmt wird, wenn der Elevationswinkel (S) größer ist als ein Grenz-Elevationswinkel, singulärer Winkel (S_{L}) genannt, und wenn der Elevationswinkel (S) kleiner als oder gleich dem singulären Winkel (S_{L}) ist.

2. Ausrichtungssystem (20) nach Anspruch 1, wobei, wenn der Elevationswinkel (S) kleiner als oder gleich dem singulären Winkel (S_{L}) ist, das Rollsteuerungsgesetz frei von Termen in $\frac{1}{tan \left(S\right)}$ ist, mit S dem Elevationswinkel der Ausrichtungsrichtung (P).

3. Ausrichtungssystem (20) nach Anspruch 1 oder 2, wobei die Zone des Raums, die Elevationswinkeln entspricht, die kleiner sind als der singuläre Winkel (S_{L}), ein Kegel ist, singulärer Kegel (C_{sing}) genannt, wobei das Ziel (C) außerhalb des singulären Kegels (C_{sing}) betrachtet wird, wenn der Elevationswinkel (S) größer ist als der singuläre Winkel (S_{L}), und andernfalls in dem singulären Kegel (C_{sing}), wobei, wenn das Ziel (C) in dem singulären Kegel (C_{sing}) ist, das Rollsteuerungsgesetz eine Funktion einer Schätzung des Rollwinkels (R) beim nächsten Austritt des Ziels (C) aus dem singulären Kegel (C_{sing}) ist.

4. Ausrichtungssystem (20) nach Anspruch 3, wobei das Rollsteuerungsgesetz ist:
a. solange das Ziel (C) in dem singulären Kegel (C_{sing}) ist und die Träger-Ziel-Geschwindigkeit (V_{S}) konstant ist, ein anfängliches Rollsteuerungsgesetz, das beim letzten Eintritt des Ziels (C) in den singulären Kegel (C_{sing}) bestimmt wurde, und
b. wenn das Ziel (C) in dem singulären Kegel (C_{sing}) ist, und jedes Mal, wenn die empfangene Träger-Ziel-Geschwindigkeit (V_{S}) variiert, ein aktualisiertes Rollsteuerungsgesetz ab dem Punkt des singulären Kegels (C_{sing}), der dem Empfang der Träger-Ziel-Geschwindigkeit (V_{S}) entspricht.

5. Ausrichtungssystem (20) nach Anspruch 4, wobei, wenn der Elevationswinkel (S) kleiner als oder gleich dem singulären Winkel (S_{L}) ist, die Bestimmungsvorrichtung (34) konfiguriert ist, um jedes von dem anfänglichen Rollsteuerungsgesetz und den eventuellen aktualisierten Rollsteuerungsgesetzen in Abhängigkeit von einem anfänglichen Rollwinkel (R₀) und einem endgültigen Rollwinkel (R_{F}) zu bestimmen, wobei der anfängliche Rollwinkel (R₀) der Rollwinkel an einem Punkt des singulären Kegels (C_{sing}), Startpunkt (P_{D}) genannt, ist, wobei der Startpunkt (P_{D}) der Eintrittspunkt des Ziels (C) in den singulären Kegel (C_{sing}) für das anfängliche Rollsteuerungsgesetz ist und der Punkt des singulären Kegels (C_{sing}) ist, der dem Empfang der letzten Träger-Ziel-Geschwindigkeit (V_{S}) für jedes aktualisierte Rollsteuerungsgesetz entspricht, wobei der endgültige Rollwinkel (R_{F}) dem geschätzten Rollwinkel beim nächsten Austritt (P_{F}) des Ziels (C) aus dem singulären Kegel (C_{sing}) entspricht, wobei der nächste Austritt des Ziels (C) geschätzt wird, indem angenommen wird, dass das Ziel (C) einer vorbestimmten Trajektorie ab dem Startpunkt (P_{D}) folgt.

6. Ausrichtungssystem (20) nach Anspruch 5, wobei, wenn der Elevationswinkel (S) kleiner als oder gleich dem singulären Winkel (S_{L}) ist, das Rollsteuerungsgesetz eine Funktion der Zeit ist, deren Koeffizienten durch die Bestimmungsvorrichtung (34) in Abhängigkeit von dem entsprechenden anfänglichen Rollwinkel (R₀) und dem entsprechenden endgültigen Rollwinkel (R_{F}) bestimmt werden, wobei die Funktion vorzugsweise eine Polynomfunktion ist.

7. Ausrichtungssystem (20) nach Anspruch 5 oder 6, wobei, wenn der Elevationswinkel (S) kleiner als oder gleich dem singulären Winkel (S_{L}) ist, die Bestimmungsvorrichtung (34) konfiguriert ist, um den endgültigen Rollwinkel (R_{F}) durch Transformation der empfangenen Träger-Ziel-Geschwindigkeit (V_{S}) in lineare Geschwindigkeiten in einem geometrischen Bezugssystem, singuläres Bezugssystem genannt, zu schätzen, wobei das singuläre Bezugssystem ein Bezugssystem in Polarkoordinaten ist, dessen radiale Koordinate der Elevationswinkel (S) ist und dessen Winkelkoordinate der Rollwinkel (R) ist, wobei die Drehgeschwindigkeit des Ziels (C) um die Sekundärachse (Y) eine lineare Geschwindigkeit entlang der Ordinatenachse (Zsing) in dem singulären Bezugssystem ist, wobei die Drehgeschwindigkeit des Ziels (C) um die Tertiärachse (Z) eine lineare Geschwindigkeit entlang der Abszissenachse (Ysing) in dem singulären Bezugssystem ist.

8. Ausrichtungssystem (20) nach einem der Ansprüche 5 bis 7, wobei der endgültige Rollwinkel (R_{F}) durch die folgende Formel erhalten wird: ${R}_{F} = {R}_{0} + π - 2 α$ Wobei:
- *R_{F}* der endgültige Rollwinkel ist,
- *R*₀ der anfängliche Rollwinkel ist, $α = acos \left(\vec{U}.\vec{{V}_{c}}\right) ,$ $\vec{U} = \left(\begin{matrix}- sin \left({R}_{0}\right) \\ cos \left({R}_{0}\right)\end{matrix}\right) ,$
- $\vec{{V}_{c}} = \left(\begin{matrix}q \\ - r\end{matrix}\right)$ mit q der Drehgeschwindigkeit des Trägers (22) um die Sekundärachse (Y) und r der Drehgeschwindigkeit des Trägers (22) um die Tertiärachse (Z).

9. Ausrichtungssystem (20) nach einem der Ansprüche 1 bis 8, wobei, wenn der Elevationswinkel (S) größer ist als der singuläre Winkel (S_{L}), das Rollsteuerungsgesetz die folgende Form hat: $\dot{R} = - p + \frac{- q . sin \left(R\right) + r . cos \left(R\right)}{tan \left(S\right)}$ Wobei:
- *Ṙ* der Rollgeschwindigkeitssollwert ist,
- p die Drehgeschwindigkeit des Trägers (22) um die Primärachse (X) ist, q die Drehgeschwindigkeit des Trägers (22) um die Sekundärachse (Y) und r die Drehgeschwindigkeit des Trägers (22) um die Tertiärachse (Z) ist,
- *R* der Rollwinkel der Ausrichtungsrichtung (P) ist, und
- *S* der Elevationswinkel der Ausrichtungsrichtung (P) ist.

10. Verfahren zum Ausrichten eines Ziels (C) durch ein Ausrichtungssystem (20) nach einem der Ansprüche 1 bis 9, wobei das Verfahren die folgenden Schritte umfasst:
a. die Bestimmung, zu jedem Zeitpunkt, durch die Bestimmungsvorrichtung (34), des Schwenksollwerts, umfassend:
i. den Empfang der Träger-Ziel-Geschwindigkeit (V_{S}) im Laufe der Zeit,
ii. den Empfang, zu jedem Zeitpunkt, der Ausrichtungsdaten (DP), umfassend den Rollwinkel (R) und den Elevationswinkel (S) der Ausrichtungsrichtung (P) in dem Trägerbezugssystem, wobei die Ausrichtungsrichtung (P) als die Richtung des Ziels (C) betrachtet wird,
iii. die Bestimmung, zu jedem Zeitpunkt, des Elevationsgeschwindigkeitssollwerts (S) gemäß einem Elevationssteuerungsgesetz in Abhängigkeit von den empfangenen Ausrichtungsdaten (DP) und der letzten empfangenen Träger-Ziel-Geschwindigkeit (V_{S}), und
iv. die Bestimmung, zu jedem Zeitpunkt, des Rollgeschwindigkeitssollwerts (*Ṙ*) in Abhängigkeit von den empfangenen Ausrichtungsdaten (DP) und der letzten empfangenen Träger-Ziel-Geschwindigkeit (V_{S}), wobei der Rollgeschwindigkeitssollwert (*Ṙ*) gemäß unterschiedlichen Rollsteuerungsgesetzen bestimmt wird, wenn der Elevationswinkel (S) größer ist als ein Grenz-Elevationswinkel, singulärer Winkel (S_{L}) genannt, und wenn der Elevationswinkel (S) kleiner als oder gleich dem singulären Winkel (S_{L}) ist,
b. die Veränderung, durch die Schwenkvorrichtung (32), der Orientierung der Ausrichtungsrichtung (P) in Abhängigkeit von dem letzten bestimmten Schwenksollwert.

## Claims

1. Pointing system (20) for a target (C), the pointing system (20) being mounted on a support (22) mobile with respect to the target (C), a frame, called support frame, being defined with respect to the support (22), the support frame having three axes orthogonal to one another from among a primary axis (X), a secondary axis (Y) and a tertiary axis (Z), the pointing system (20) comprising:
a. a transmitting-receiving surface (30) for a signal in a pointing direction (P), the pointing direction (P) being identified by a roll angle (R) and an elevation angle (S) in the support frame,
b. a pivoting device (32) suitable for modifying the orientation of the pointing direction (P) as a function of a pivoting setpoint, the pivoting device (32) being suitable for pivoting the pointing direction (P) about the primary axis (X) of the support frame in order to modify the roll angle (R) and for pivoting the pointing direction (P) about the secondary axis (Y) of the support frame in order to modify the elevation angle (S),
c. a device (34) for continuously determining the pivoting setpoint as a function of the speed of rotation of the support (22) with respect to the target (C), called support-target speed (V_{S}), so as to orient the pointing direction (P) toward the target (C), the pivoting setpoint comprising a setpoint for speed of rotation about the primary axis (X), called roll speed setpoint (*Ṙ*), and a setpoint for speed of rotation about the secondary axis (Y), called elevation speed setpoint (S), **characterized in that** the determination device (34) is configured to:
i. receive over time the support-target speed (V_{S}),
ii. receive, at each instant, pointing data (DP) comprising the roll angle (R) and the elevation angle (S) of the pointing direction (P), the pointing direction (P) being considered to be the direction of the target (C),
iii. determine, at each instant, the elevation speed setpoint (*Ṡ*) according to an elevation control law as a function of the pointing data (DP) received and of the last support-target speed (V_{S}) received, and
iv. determine, at each instant, the roll speed setpoint (*Ṙ*) being determined according to different roll control laws when the elevation angle (S) is greater than a limit elevation angle, called singular angle (S_{L}), and when the elevation angle (S) is less than or equal to the singular angle (S_{L}).

2. Pointing system (20) according to claim 1, wherein when the elevation angle (S) is less than or equal to the singular angle (S_{L}), the roll control law is devoid of terms in $\frac{1}{tan \left(S\right)}$ with S the elevation angle of the pointing direction (P).

3. Pointing system (20) according to claim 1 or 2, wherein the region of space corresponding to elevation angles less than the singular angle (S_{L}) is a cone, called singular cone (C_{sing}), the target (C) being considered outside the singular cone (C_{sing}) when the elevation angle (S) is greater than the singular angle (S_{L}), and in the singular cone (C_{sing}) otherwise, when the target (C) is in the singular cone (C_{sing}), the roll control law being a function of an estimation of the roll angle (R) upon the next exit of the target (C) from the singular cone (C_{sing}).

4. Pointing system (20) according to claim 3, wherein the roll control law is:
a. as long as the target (C) is in the singular cone (C_{sing}) and the support-target speed (V_{S}) is constant, an initial roll control law determined upon the last entry of the target (C) into the singular cone (C_{sing}), and
b. when the target (C) is in the singular cone (C_{sing}), and each time the support-target speed (V_{S}) received varies, a roll control law updated from the point of the singular cone (C_{sing}) corresponding to the reception of the support-target speed (V_{S}).

5. Pointing system (20) according to claim 4, wherein when the elevation angle (S) is less than or equal to the singular angle (S_{L}), the determination device (34) is configured to determine each of the initial roll control law and of the possible updated roll control laws as a function of an initial roll angle (R₀) and of a final roll angle (R_{F}), the initial roll angle (R₀) being the roll angle at a point of the singular cone (C_{sing}), called starting point (P_{D}), the starting point (P_{D}) being the point of entry of the target (C) into the singular cone (C_{sing}) for the initial roll control law and being the point of the singular cone (C_{sing}) corresponding to the reception of the last support-target speed (V_{S}) for each updated roll control law, the final roll angle (R_{F}) corresponding to the roll angle estimated upon the next exit (P_{F}) of the target (C) from the singular cone (C_{sing}), the next exit of the target (C) being estimated by assuming that the target (C) follows a predetermined trajectory from the starting point (P_{D}).

6. Pointing system (20) according to claim 5, wherein when the elevation angle (S) is less than or equal to the singular angle (S_{L}), the roll control law is a function of time of which the coefficients are determined by the determination device (34) as a function of the corresponding initial roll angle (R₀) and final roll angle (R_{F}), the function being preferably a polynomial function.

7. Pointing system (20) according to claim 5 or 6, wherein when the elevation angle (S) is less than or equal to the singular angle (S_{L}), the determination device (34) is configured to estimate the final roll angle (R_{F}) by transformation of the support-target speed (V_{S}) received into linear speeds in a geometric frame, called singular frame, the singular frame being a frame in polar coordinates of which the radial coordinate is the elevation angle (S) and the angular coordinate is the roll angle (R), the rotational speed of the target (C) about the secondary axis (Y) being a linear speed along the axis of ordinates (Zsing) in the singular frame, the rotational speed of the target (C) about the tertiary axis (Z) being a linear speed along the axis of abscissas (Ysing) in the singular frame.

8. Pointing system (20) according to any one of claims 5 to 7, wherein the final roll angle (R_{F}) is obtained by the following formula: ${R}_{F} = {R}_{0} + π - 2 α$ Where:
- R_{F} is the final roll angle,
- R₀ is the initial roll angle,
- $α = acos \left(\vec{U}.\vec{{V}_{c}}\right) ,$ $\vec{U} = \left(\begin{matrix}- sin \left({R}_{0}\right) \\ cos \left({R}_{0}\right)\end{matrix}\right) ,$
- $\vec{{V}_{c}} = \left(\begin{matrix}q \\ - r\end{matrix}\right)$ with q the speed of rotation of the support (22) about the secondary axis (Y) and r the speed of rotation of the support (22) about the tertiary axis (Z).

9. Pointing system (20) according to any one of claims 1 to 8, wherein when the elevation angle (S) is greater than the singular angle (S_{L}), the roll control law is of the following form: $\dot{R} = - p + \frac{- q . sin \left(R\right) + r . cos \left(R\right)}{tan \left(S\right)}$ Where:
- *Ṙ* is the roll speed setpoint,
- p is the speed of rotation of the support (22) about the primary axis (X), q the speed of rotation of the support (22) about the secondary axis (Y) and r the speed of rotation of the support (22) about the tertiary axis (Z),
- *R* is the roll angle of the pointing direction (P), and
- *S* is the elevation angle of the pointing direction (P).

10. Method for pointing a target (C) by a pointing system (20) according to any one of claims 1 to 9, the method comprising the following steps:
a. the determination, at each instant, by the determination device (34), of the pivoting setpoint, comprising:
i. the reception over time of the support-target speed (V_{S}),
ii. the reception, at each instant, of the pointing data (DP) comprising the roll angle (R) and the elevation angle (S) of the pointing direction (P) in the support frame, the pointing direction (P) being considered to be the direction of the target (C),
iii. the determination, at each instant, of the elevation speed setpoint (*Ṡ*) according to an elevation control law as a function of the pointing data (DP) received and of the last support-target speed (V_{S}) received, and
iv. the determination, at each instant, of the roll speed setpoint (*Ṙ*) as a function of the pointing data (DP) received and of the last support-target speed (V_{S}) received, the roll speed setpoint (*Ṙ*) being determined according to different roll control laws when the elevation angle (S) is greater than a limit elevation angle, called singular angle (S_{L}), and when the elevation angle (S) is less than or equal to the singular angle (S_{L}),
b. the modification, by the pivoting device (32), of the orientation of the pointing direction (P) as a function of the last determined pivoting setpoint.
